# EUROPEAN PATENT APPLICATION

(11) **EP 4 354 561 A1**
(43) Date of publication of application: **17.04.2024**
(21) Application number: 22824501.5
(22) Date of filing: 14.02.2022
(51) Int. Cl.: H01M 8/0444, H01M 8/04537, H01M 8/04746, H01M 8/18

(54) **REDOX FLOW BATTERY**

(30) Priority: 17.06.2021 JP 2021100556
(71) Applicant: Mitsubishi Heavy Industries, Ltd., Tokyo 100-8332 (JP)
(72) Inventor: SATO, Akio, Tokyo 100-8332 (JP); KIYABU, Toshiyasu, Tokyo 100-8332 (JP); WAKASA, Tsuyoshi, Tokyo 100-8332 (JP); MORIYAMA, Kei, Tokyo 100-8332 (JP)
(74) Representative: Studio Torta S.p.A.
(86) International application number: PCT/JP2022/005544
(87) International publication number: WO 2022/264500

(57) **Abstract**

Provided is a redox flow battery capable of eliminating reductions in charge and discharge efficiencies and a reduction in capacity due to a shift of potential balance between a first electrode and a second electrode even if a power storage rate range is extended. This redox flow battery comprises: at least one cell in which a first chamber in which a first electrode serving as an anode during charging is installed and a second chamber in which a second electrode serving as a cathode during charging is installed are divided by a membrane; a first tank that stores a first electrolyte; a first circulation device including a first supply path that connects the first tank and the first chamber, and a first recovery path that connects the first chamber and the first tank; a second tank that stores a second electrolyte; a second circulation device including a second supply path that connects the second tank and the second chamber, and a second recovery path that connects the second chamber and the second tank; and an adjustment path that is provided so as to supply gas included in the first tank or the first recovery path to the second recovery path.

## Description

### Technical Field

The present disclosure relates to a redox flow battery.

Priority is claimed on Japanese Patent Application No. 2021-100556, filed June 17, 2021, the content of which is incorporated herein by reference.

### Background Art

PTL 1 discloses a redox flow battery. The redox flow battery includes a cell, a first tank, a first circulation device, a second tank, and a second circulation device. The cell includes a first chamber in which a first electrode is built, a second chamber in which a second electrode is built, and a membrane that partitions the first chamber and the second chamber. A first electrolytic solution is stored in the first tank, and the first electrolytic solution is circulated between the first tank and the first chamber by the first circulation device. Likewise, a second electrolytic solution is stored in the second tank, and the second electrolytic solution is circulated between the second tank and the second chamber by the second circulation device.

### Citation List

### Patent Literature

[PTL 1] Japanese Unexamined Patent Application Publication No. 2013-25964

### Summary of Invention

### Technical Problem

However, in a configuration in the related art disclosed in PTL 1, hydrogen and oxygen are generated due to electrolysis in a case where a power storage rate range of the redox flow battery is expanded. Accordingly, there is a concern that a reduction in charge/discharge efficiency or a reduction in capacity may occur due to a difference in potential balance between the first electrode and the second electrode.

The present disclosure has been made in view of the above-mentioned problem, and an object of the present disclosure is to provide a redox flow battery that can eliminate a reduction in charge/discharge efficiency and a reduction in capacity caused by a difference in potential balance between a first electrode and a second electrode even though a power storage rate range is expanded. Solution to Problem

In order to achieve the object, a redox flow battery according to an aspect of the present disclosure includes at least one cell of which a first chamber in which a first electrode serving as an anode during charge is installed and a second chamber in which a second electrode serving as a cathode during charge is installed are partitioned by a membrane, a first tank that stores a first electrolytic solution,a first circulation device that includes a first supply passage connecting the first tank to the first chamber and a first recovery passage connecting the first chamber to the first tank, a second tank that stores a second electrolytic solution,a second circulation device that includes a second supply passage connecting the second tank to the second chamber and a second recovery passage connecting the second chamber to the second tank, andan adjustment passage that is provided to supply gas present in the first tank or the first recovery passage to the second recovery passage.

### Advantageous Effects of Invention

According to the redox flow battery of the aspect of the present disclosure, gas containing oxygen generated from the first electrode due to the expansion of a power storage range of the redox flow battery is supplied to the second recovery passage. Accordingly, the oxygen contained in the gas is mixed with the second electrolytic solution present in the second recovery passage and is supplied to the cell (second chamber). Then, the oxygen contained in the gas, which is mixed with the second electrolytic solution, reacts with an active material contained in the second electrolytic solution in the cell (second chamber), so that forced discharge is performed. Accordingly, a difference in potential balance between the first electrode and the second electrode is eliminated, so that a reduction in charge/discharge efficiency and a reduction in capacity are also eliminated.

### Brief Description of Drawings

Fig. 1 is a schematic diagram showing a configuration of a redox flow battery according to a first embodiment.
Fig. 2 is a diagram schematically showing helical grooves provided on an inner wall of a second recovery passage.
Fig. 3 is a schematic diagram showing a configuration of a redox flow battery according to a second embodiment.
Fig. 4 is a schematic diagram showing a configuration of a redox flow battery according to a third embodiment.
Fig. 5 is a schematic diagram showing a configuration of a redox flow battery according to a fourth embodiment.
Fig. 6 is a schematic diagram showing a configuration of a redox flow battery according to a fifth embodiment.
Fig. 7 is a schematic diagram showing a configuration of a redox flow battery according to a sixth embodiment. Description of Embodiments

Redox flow batteries according to embodiments will be described below with reference to the accompanying drawings. Dimensions, materials, shapes, relative arrangements, and the like of components described as embodiments or illustrated in the drawings are not intended to limit the scope of the present invention, but are merely explanatory examples.

### [First embodiment]

### <Configuration of redox flow battery 1A>

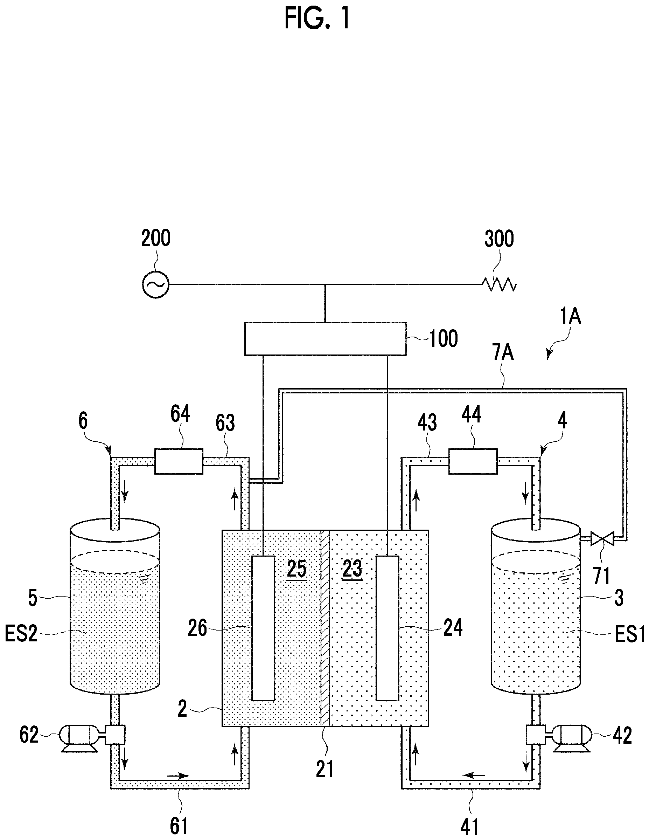

Fig. 1 is a schematic diagram showing a configuration of a redox flow battery 1A according to a first embodiment.

As shown in Fig. 1, the redox flow battery 1A according to the first embodiment includes a cell 2, a first tank 3, a first circulation device 4, a second tank 5, a second circulation device 6, and an adjustment passage 7A.

The cell 2 includes a first chamber 23 and a second chamber 25 that are partitioned by a membrane 21. A first electrode 24 is installed in the first chamber 23, and a second electrode 26 is installed in the second chamber 25. Each of the first electrode 24 and the second electrode 26 are electrically connected to an AC-DC converter 100. The AC-DC converter 100 is electrically connected to each of an AC power supply 200 and a load 300. In a case where a DC power supply is used instead of the AC power supply 200 and the load 300 is operated using a direct current, the AC-DC converter 100 is not required. The first electrode 24 is a positive electrode, serves as an anode to which a current flows from the AC-DC converter 100 during charge, and serves as a cathode from which a current flows to the AC-DC converter 100 during discharge. The second electrode 26 is a negative electrode, serves as a cathode from which a current flows to the AC-DC converter 100 during charge, and serves as an anode to which a current flows from the AC-DC converter 100 during discharge. Only one cell 2 is shown in Fig. 1, but the present disclosure is not limited to a redox flow battery including only one cell 2 and may be applied to a redox flow battery including a cell stack in which two or more cells 2 are stacked.

The first tank 3 is a sealed tank in which a first electrolytic solution ES1 containing an active material is stored. The first electrolytic solution ES1 is a positive electrode-electrolytic solution, and the first tank 3 forms a positive electrode-electrolytic solution tank. The first electrolytic solution ES1 is a solution in which an active material is dissolved in an aqueous solution containing a support electrolyte. For example, an acidic aqueous solution in which a sulfuric acid is dissolved in an aqueous solution containing a support electrolyte is used as the first electrolytic solution ES1, and vanadium ions (VO₂⁺ (VO²⁺)) are used as the active material.

The first circulation device 4 is a device that circulates the first electrolytic solution ES1 between the first chamber 23 and the first tank 3, and includes a first supply passage 41 that connects the first tank 3 to the first chamber 23 and a first recovery passage 43 that connects the first chamber 23 to the first tank 3, and the first electrolytic solution ES1 is circulated by a first pump 42 provided on the first supply passage 41. Further, the first recovery passage 43 is provided with a first heat exchanger 44, so that the first electrolytic solution ES1 flowing through the first recovery passage 43 is maintained in an appropriate temperature range.

The second tank 5 is a sealed tank in which a second electrolytic solution ES2 containing an active material is stored. The second electrolytic solution ES2 is a negative electrode-electrolytic solution, and the second tank 5 forms a negative electrode-electrolytic solution tank. The second electrolytic solution ES2 is a solution in which an active material is dissolved in an aqueous solution containing a support electrolyte. For example, an acidic aqueous solution in which a sulfuric acid is dissolved in a support electrolyte is used as the second electrolytic solution ES2, and vanadium ions (V²⁺ (V³⁺)) are used as the active material.

The second circulation device 6 is a device that circulates the second electrolytic solution ES2 between the second chamber 25 and the second tank 5, and includes a second supply passage 61 that connects the second tank 5 to the second chamber 25 and a second recovery passage 63 that connects the second chamber 25 to the second tank 5, and the second electrolytic solution ES2 is circulated by a second pump 62 provided on the second supply passage 61. Further, the second recovery passage 63 is provided with a second heat exchanger 64, so that the second electrolytic solution ES2 flowing through the second recovery passage 63 is maintained in an appropriate temperature range.

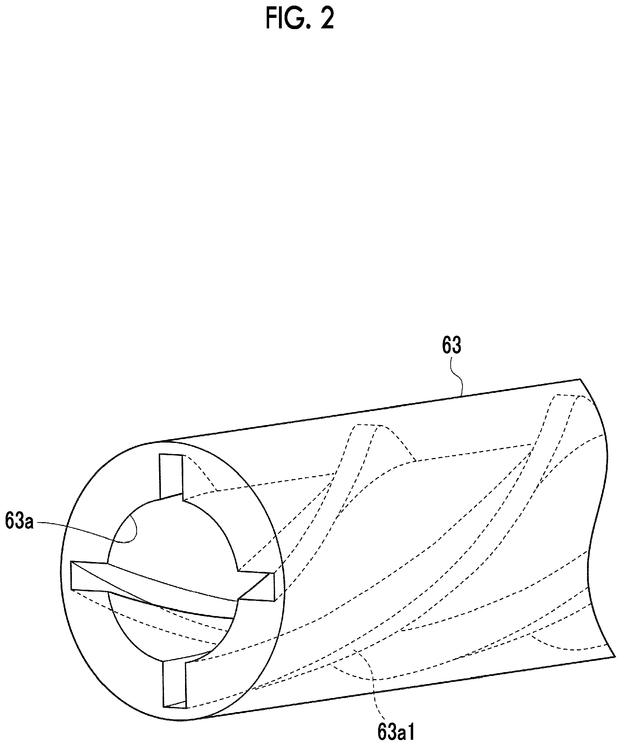

As shown in Fig. 2, an inner wall 63a of the second recovery passage 63 includes helical grooves 63a1. The helical grooves 63a1 are grooves that form helixes in a traveling direction (longitudinal direction) as typified by rifling. The helical grooves 63a1 may be provided over the entire length of the second recovery passage 63 or may be provided at a part of the second recovery passage 63. For example, the helical grooves 63a1 may be provided up to only a portion extending straight from an outlet of the cell 2 to impart a turning component to the second electrolytic solution ES2 discharged from the cell 2.

As shown in Fig. 1, the adjustment passage 7A is to adjust a difference in potential balance between the first electrode 24 and the second electrode 26 that is caused by gas generated due to the electrolysis of water. One end of the adjustment passage 7A is connected to an upper region of the first tank 3 in the direction of gravity, and the other end of the adjustment passage 7A is connected to an upstream side of the second recovery passage 63, preferably, a side of the second recovery passage 63 close to the outlet of the cell 2. The reason why the side of the second recovery passage 63 close to the outlet of the cell 2 is preferable is that a passage used to mix gas is lengthened.

The adjustment passage 7A is provided with a valve 71. The valve 71 is to open or close the adjustment passage 7A, and a gas phase in the first tank 3 and a liquid phase in the second recovery passage 63 communicate with each other in a case where the valve 71 is opened.

### <Operation of redox flow battery 1A>

In a case where the first circulation device 4 and the second circulation device 6 are operated, the first electrolytic solution ES1 is supplied from the first tank 3 to the first chamber 23 and the second electrolytic solution ES2 is supplied from the second tank 5 to the second chamber 25. Accordingly, the first chamber 23 is filled with the first electrolytic solution ES1 and the second chamber 25 is filled with the second electrolytic solution ES2, so that the redox flow battery 1A can be charged and discharged.

In a case where the redox flow battery 1A is to be charged, an alternating current is supplied from the AC power supply 200 to the AC-DC converter 100 and is converted into a direct current by the AC-DC converter 100. The converted direct current flows to the first electrode 24 (positive electrode). That is, electrons flow from the first electrode (positive electrode) to the second electrode 26 (negative electrode), and the active material contained in the electrolytic solution receives the electrons at the second electrode 26. For example, a case where vanadium ions (VO²⁺) are used as the active material of the first electrolytic solution ES1 and vanadium ions (V²⁺) are used as the active material of the second electrolytic solution ES2 will be described by way of example. In this case, a reaction represented by Reaction formula "VO²⁺+2H₂O→VO₂⁺+2H⁺" occurs at the first electrode 24 (positive electrode) and a reaction represented by Reaction formula "V³⁺→V²⁺" occurs at the second electrode 26 (negative electrode).

Since a reaction occurs in each of the first chamber 23 and the second chamber in a case where the redox flow battery 1A is discharged, electrons are discharged from the active material contained in the electrolytic solution to the second electrode 26 (negative electrode) and flow from the second electrode 26 (negative electrode) to the first electrode 24 (positive electrode). For example, a case where vanadium ions (VO²⁺) are used as the active material of the first electrolytic solution ES1 and vanadium ions (V²⁺) are used as the active material of the second electrolytic solution ES2 will be described by way of example. In this case, a reaction represented by Reaction formula "VO₂⁺+2H⁺→VO²⁺+2H₂O" occurs at the first electrode 24 (positive electrode) and a reaction represented by Reaction formula "V²⁺→V³⁺" occurs at the second electrode 26 (negative electrode), so that electrons are discharged to the second electrode 26 (negative electrode) and flow from the second electrode 26 (negative electrode) to the first electrode 24 (positive electrode). Therefore, a current flows from the first electrode 24 (positive electrode) to the AC-DC converter 100.

There is a concern that hydrogen or oxygen may be generated due to the electrolysis of water when a power storage rate range is expanded in a case where the redox flow battery 1A is charged. This hydrogen or oxygen causes a difference in potential balance between the first electrode 24 and the second electrode 26, so that a reduction in charge/discharge efficiency or a reduction in capacity occurs. Then, oxygen generated due to the electrolysis of water is recovered to the first tank 3 through the first recovery passage 43.

In a case where the valve 71 is opened in a state where the oxygen generated due to the electrolysis of water is accumulated in the first tank 3, a gas phase in the first tank 3 and a liquid phase in the second recovery passage 63 communicate with each other. In this case, since the second electrolytic solution ES2 flows through the second recovery passage 63, a pressure in the second recovery passage 63 is lower than a pressure in the adjustment passage 7A and gas in the adjustment passage 7A is sucked into the second recovery passage 63 due to this pressure difference (Bernoulli's theorem). Accordingly, gas in the first tank 3 is supplied to the second recovery passage 63 and is mixed with the second electrolytic solution ES2 in the second recovery passage 63.

The second electrolytic solution ES2 with which the gas is mixed in the second recovery passage 63 passes through the second tank 5 and the second supply passage 61 and is supplied to the cell 2 (second chamber 25). Then, in a case where, for example, vanadium ions (V²⁺) are used as the active material of the second electrolytic solution ES2, oxygen contained in the second electrolytic solution ES2, which is supplied to the cell 2 and with which the gas is mixed, oxygen contained in the second electrolytic solution ES2 reacts with the vanadium ions (V²⁺) (O₂+4H⁺+4V²⁺→4V³⁺+2H₂O). Accordingly, V²⁺ ions are discharged to V³⁺ (forced discharge). Therefore, a difference in potential balance between the first electrode 24 and the second electrode 26 is eliminated, so that a reduction in charge/discharge efficiency and a reduction in capacity are also eliminated.

### <Effects of redox flow battery 1A>

According to the redox flow battery 1A of the first embodiment, in a case where the valve 71 is opened, a gas phase in the first tank 3 and a liquid phase in the second recovery passage 63 communicate with each other, gas in the adjustment passage 7A is sucked in, and gas in the first tank 3 is supplied into the second recovery passage 63. Accordingly, a pump or the like for supplying the gas present in the first tank 3 into the second recovery passage 63 does not need to be separately provided.

Since the oxygen generated due to the electrolysis of water is supplied to the cell 2 (second chamber 25), forced discharge occurs in the cell (second chamber 25). Accordingly, a difference in potential balance between the first electrode 24 and the second electrode is eliminated, so that a reduction in charge efficiency and a reduction in capacity are eliminated.

For example, in a case where vanadium ions (V²⁺) are used as the active material of the second electrolytic solution ES2, forced discharge represented by Reaction formula "O₂+4H⁺+4V²⁺→4V³⁺+2H₂O" is performed. As a result, a difference in potential balance between the first electrode 24 and the second electrode 26 is eliminated.

Further, since the inner wall 63a of the second recovery passage 63 includes the helical grooves 63a1, a turning component is imparted to the second electrolytic solution ES2 flowing through the second recovery passage 63. Accordingly, the second electrolytic solution ES2 flowing through the second recovery passage 63 turns helically, and the gas supplied to the second recovery passage 63 from the adjustment passage 7A is effectively mixed with the second electrolytic solution ES2. As a result, discharge in the cell (second chamber) is efficiently performed.

### [Second embodiment]

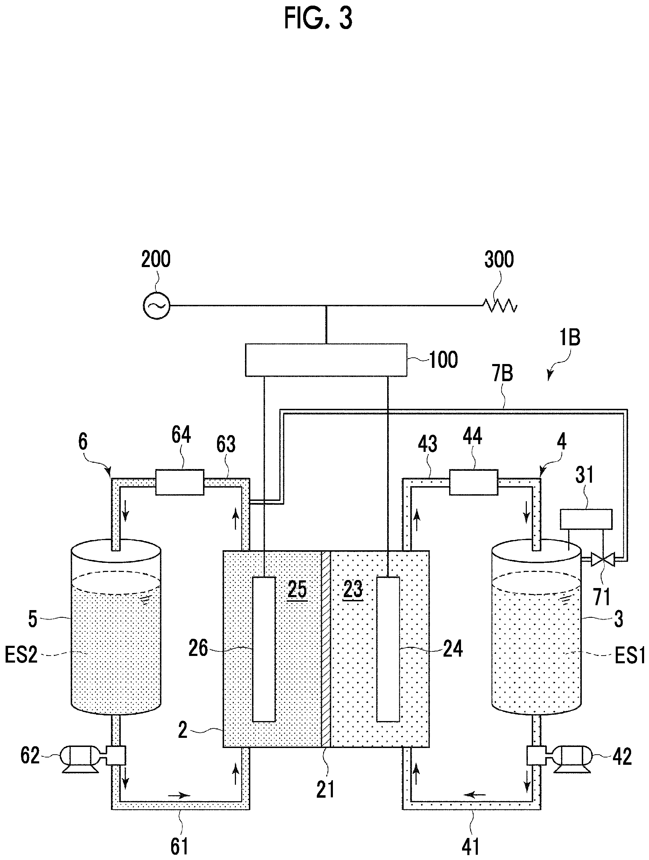

Fig. 3 is a schematic diagram showing a configuration of a redox flow battery 1B according to a second embodiment. The same component as that of the redox flow battery 1A according to the first embodiment described above will be denoted by the same reference numeral and the description thereof will be omitted.

As shown in Fig. 3, the redox flow battery 1B according to the second embodiment includes a gas sensor 31 that measures the concentration of oxygen contained in a gas phase in the first tank 3. In the redox flow battery 1B according to the second embodiment, a valve 71 is opened in a case where the concentration of oxygen measured by the gas sensor 31 exceeds a predetermined upper limit threshold value, and the valve 71 provided on an adjustment passage 7B is closed in a case where the concentration of oxygen measured by the gas sensor 31 is less than a predetermined threshold value.

According to the redox flow battery 1B of the second embodiment, gas in the first tank 3 is supplied to the second recovery passage 63 until the concentration of oxygen contained in a gas phase in the first tank 3 is less than a lower limit threshold value after exceeding the upper limit threshold value. Accordingly, the gas (oxygen) in the first tank 3 can be effectively supplied to the second recovery passage 63. Therefore, a reaction in the cell 2 (second chamber 25) is effectively performed, so that discharge in the cell 2 (second chamber 25) is efficiently performed.

### [Third embodiment]

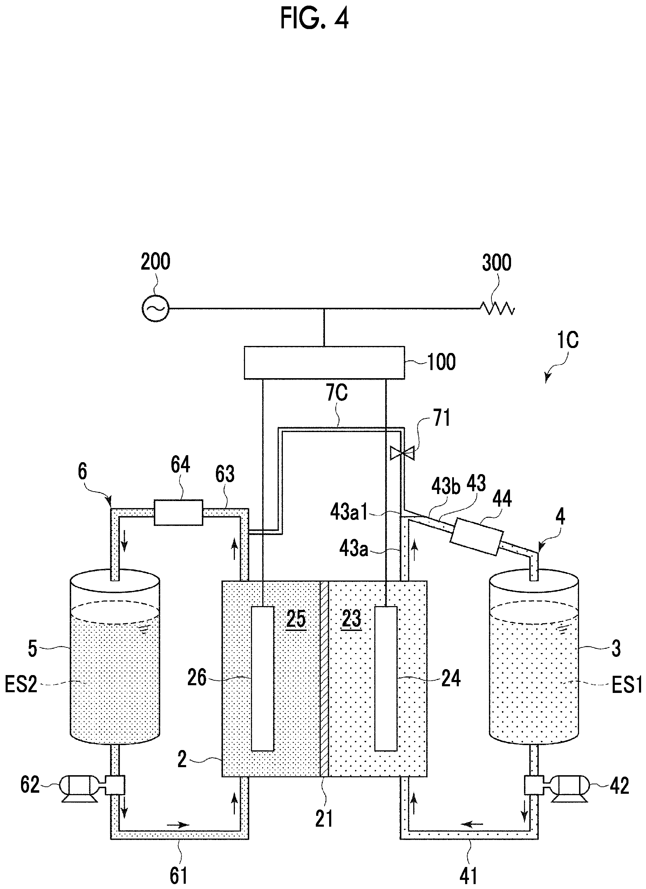

Fig. 4 is a schematic diagram showing a configuration of a redox flow battery 1C according to a third embodiment. The same component as that of the redox flow battery according to the first embodiment will be denoted by the same reference numeral and the description thereof will be omitted.

As shown in Fig. 4, in the redox flow battery 1C according to the third embodiment, a first recovery passage 43 includes an ascending portion 43a and a descending portion 43b. The ascending portion 43a is a portion extending upward in the direction of gravity, and is not limited to a portion extending straight upward and may be obliquely inclined or bent as long as extending upward in the direction of gravity. The descending portion 43b is a portion extending from an upper end 43a1 of the ascending portion 43a toward the first tank 3, and the upper end 43a1 of the ascending portion 43a is present at the highest position of the descending portion 43b in the direction of gravity. As long as the upper end 43a1 of the ascending portion 43a is present at the highest position of the descending portion 43b in the direction of gravity, the descending portion 43b may be inclined toward the first tank 3 from the upper end 43a1 of the ascending portion 43a or may be bent along a passage toward the first tank 3 from the upper end 43a1 of the ascending portion 43a. Since the first recovery passage 43 includes the ascending portion 43a and the descending portion 43b as described above, gas containing oxygen generated at the first electrode 24 is accumulated at the upper end 43a1 of the ascending portion 43a.

Further, in the redox flow battery 1C according to the third embodiment, one end of an adjustment passage 7C is connected to the upper end 43a1 of the ascending portion 43a of the first recovery passage 43 and the other end of the adjustment passage 7C is connected to an upstream side of the second recovery passage 63, preferably, a side of the second recovery passage 63 close to the outlet of the cell 2.

In the redox flow battery 1C according to the third embodiment, oxygen generated due to the expansion of a power storage rate range is accumulated at the upper end 43a1 of the ascending portion 43a through the ascending portion 43a. In a case where the valve 71 is opened in a state where oxygen is accumulated at the upper end 43a1 of the ascending portion 43a, a gas phase in the first recovery passage 43 and a liquid phase in the second recovery passage 63 communicate with each other. Accordingly, since oxygen is supplied to the cell 2 (second chamber 25) by the same operation as the first embodiment, forced discharge occurs in the cell 2 (second chamber 25). Therefore, a difference in potential balance between the first electrode 24 and the second electrode 26 is eliminated, so that a reduction in charge efficiency and a reduction in capacity are eliminated.

### [Fourth embodiment]

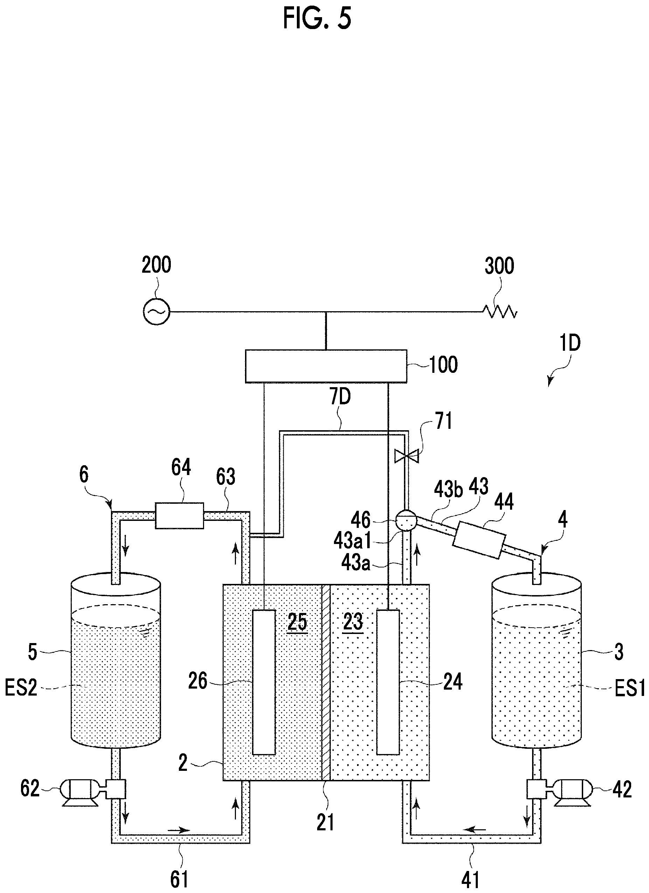

Fig. 5 is a schematic diagram showing a configuration of a redox flow battery 1D according to a fourth embodiment. The same component as that of the redox flow battery 1C according to the third embodiment described above will be denoted by the same reference numeral and the description thereof will be omitted.

As shown in Fig. 5, in the redox flow battery 1D according to the fourth embodiment, a first recovery passage 43 includes an ascending portion 43a, a gas reservoir 46, and a descending portion 43b. The ascending portion 43a is a portion extending upward in the direction of gravity, and is not limited to a portion extending straight upward and may be obliquely inclined or bent as long as extending upward in the direction of gravity. The gas reservoir 46 is provided at an upper end 43a1 of the ascending portion 43a. The gas reservoir 46 is a portion that accumulates gas, and is formed of, for example, a spherical container. The descending portion 43b is a portion extending from the gas reservoir 46 toward the first tank 3, and the gas reservoir 46 is present at the highest position of the descending portion 43b in the direction of gravity. As long as the gas reservoir 46 is present at the highest position of the descending portion 43b in the direction of gravity, the descending portion 43b may be inclined toward the first tank 3 from the gas reservoir 46 or may be bent along a passage toward the first tank 3 from the gas reservoir 46. Since the first recovery passage 43 includes the ascending portion 43a, the gas reservoir 46, and the descending portion 43b as described above, gas containing oxygen generated at the first electrode 24 is accumulated in the gas reservoir 46.

Further, in the redox flow battery 1D according to the fourth embodiment, one end of an adjustment passage 7D is connected to an upper end of the gas reservoir 46 and the other end of the adjustment passage 7D is connected to an upstream side of the second recovery passage 63, preferably, a side of the second recovery passage 63 close to the outlet of the cell 2.

In the redox flow battery 1D according to the fourth embodiment, oxygen generated due to the expansion of a power storage rate range is accumulated in the gas reservoir 46 through the ascending portion 43a. In a case where the valve 71 is opened in a state where gas is accumulated in the gas reservoir 46, a gas phase in the gas reservoir 46 and a liquid phase in the second recovery passage 63 communicate with each other. Accordingly, since oxygen is supplied to the cell 2 (second chamber 25) by the same operation as the third embodiment, forced discharge occurs in the cell 2 (second chamber 25). Therefore, a difference in potential balance between the first electrode 24 and the second electrode 26 is eliminated, so that a reduction in charge efficiency and a reduction in capacity are eliminated.

According to the redox flow battery 1D of the fourth embodiment, oxygen generated due to the electrolysis of water is accumulated in the gas reservoir 46 through the ascending portion 43a and is supplied to the second recovery passage 63 through the adjustment passage 7C in a case where the valve 71 is opened. Accordingly, oxygen generated due to the electrolysis of water can be effectively collected and can be supplied to the second recovery passage 63.

### [Fifth embodiment]

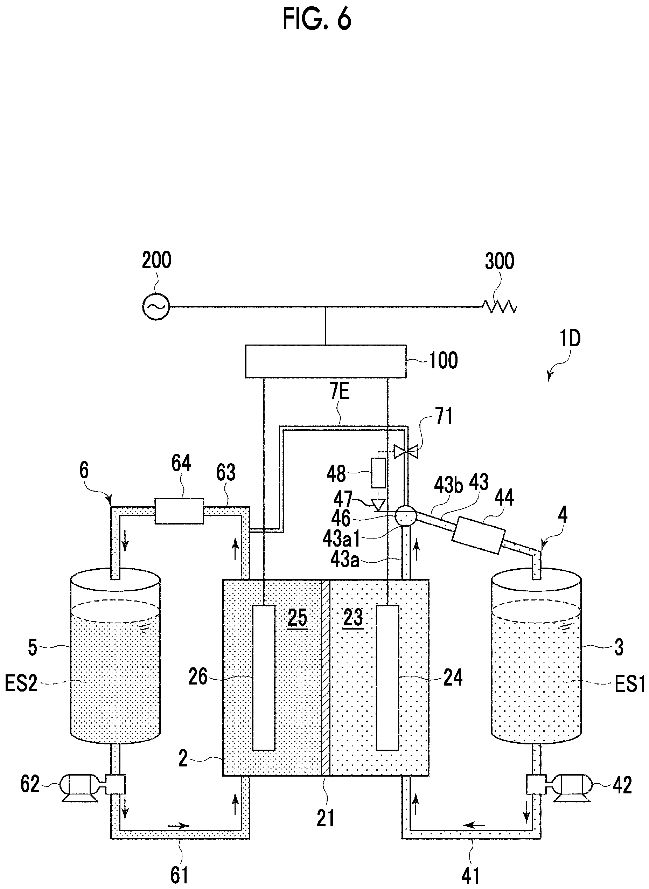

Fig. 6 is a schematic diagram showing a configuration of a redox flow battery 1E according to a fifth embodiment. The same component as that of the redox flow battery 1D according to the fourth embodiment described above will be denoted by the same reference numeral and the description thereof will be omitted.

As shown in Fig. 6, the redox flow battery 1E according to the fifth embodiment includes a level sensor 47 and a valve controller 48. The level sensor 47 is to detect a solution level of the first electrolytic solution ES1 in the gas reservoir 46, the solution level of the first electrolytic solution ES1 drops in a case where oxygen accumulated in the gas reservoir 46 is increased, and the solution level of the first electrolytic solution ES1 rises in a case where oxygen accumulated in the gas reservoir 46 is reduced. The valve controller 48 is configured to open a valve 71 provided on an adjustment passage 7E in a case where the solution level of the first electrolytic solution ES1 detected by the level sensor 47 is lower than a predetermined lower limit height, but to close the valve 71 in a case where the solution level of the first electrolytic solution ES1 detected by the level sensor 47 is higher than a predetermined upper limit height.

In the redox flow battery 1E according to the fifth embodiment, a gas phase in the gas reservoir 46 and a liquid phase in the second recovery passage 63 communicate with each other until the solution level of the first electrolytic solution ES1 detected by the level sensor 47 becomes higher than the upper limit height after becoming lower than the predetermined lower limit height. Accordingly, since oxygen is supplied to the cell 2 (second chamber 25) by the same operation as the third embodiment, forced discharge occurs in the cell 2 (second chamber 25). Therefore, a difference in potential balance between the first electrode 24 and the second electrode 26 is eliminated, so that a reduction in charge efficiency and a reduction in capacity are eliminated.

According to the redox flow battery 1E of the fifth embodiment, the valve 71 is opened in a case where the solution level of the first electrolytic solution ES1 detected by the level sensor 47 is lower than the predetermined lower limit height, and the valve 71 is closed in a case where the solution level of the first electrolytic solution ES1 is higher than the predetermined upper limit height. Accordingly, oxygen accumulated in the gas reservoir 46 can be effectively supplied to the second recovery passage 63. Therefore, a reaction in the cell 2 (second chamber 25) is effectively performed, so that discharge in the cell 2 (second chamber 25) is efficiently performed.

### [Sixth embodiment]

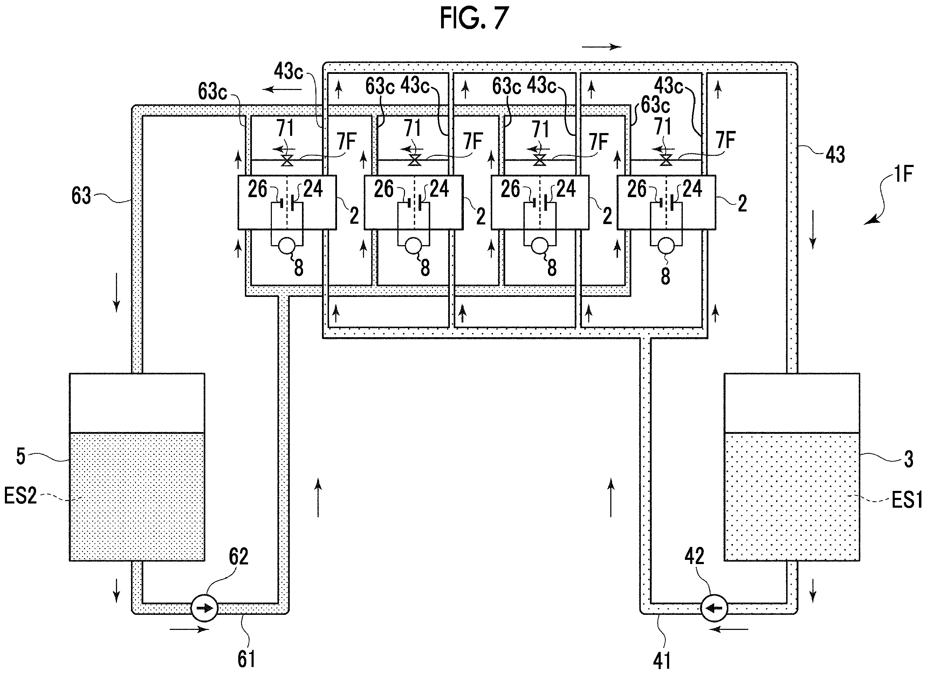

Fig. 7 is a schematic diagram showing a configuration of a redox flow battery 1F according to a sixth embodiment. The same component as that of the redox flow battery 1C according to the third embodiment described above will be denoted by the same reference numeral and the description thereof will be omitted.

As shown in Fig. 7, the redox flow battery 1F according to the sixth embodiment includes four cells 2. The number of cells is not limited to an example shown in Fig. 4, and cells 2 of which the number is arbitrary number of 2 or more may be provided. In the redox flow battery 1F according to the sixth embodiment, a first supply passage 41 branches to be connected to the respective four cells 2 (first chambers 23) and a first recovery passage 43 is connected to the respective four cells (first chambers 23). A second supply passage 61 branches to be connected to the respective four cells 2 (second chambers 25) as with the first supply passage 41, and a second recovery passage 63 is connected to the respective four cells 2 (second chambers 25) as with the first recovery passage 43.

In the redox flow battery 1F according to the sixth embodiment, one potential difference-detecting device 8, one adjustment passage 7F, and one valve 71 are provided for each cell 2. Accordingly, in the example shown in Fig. 4, one potential difference-detecting device 8, one adjustment passage 7F, and one valve 71 are provided for each of the four cells 2, that is, four potential difference-detecting devices 8, four adjustment passages 7F, and four valves 71 are provided in total for the four cells 2.

The potential difference-detecting device 8 is a device that detects a potential difference between the first electrode 24 and the second electrode 26 provided in the cell 2. Each cell is provided with the adjustment passage 7F between a first recovery passage 43c and a second recovery passage 63c extending from each cell 2, and a gas phase in the first recovery passage 43c extending from each cell 2 and a liquid phase in the second recovery passage 63c communicate with each other for each cell. Accordingly, the adjustment passage 7F is provided for each cell to supply gas present in the first recovery passage 43c, which extends from each cell 2, to the second recovery passage 63c.

In the redox flow battery 1F according to the sixth embodiment, the valve 71 for a cell 2 in which a potential difference exceeds a predetermined potential difference among the plurality of cells 2 is opened.

According to the redox flow battery of the sixth embodiment, the valve 71 for a cell 2 in which a potential difference exceeds a predetermined potential difference among the plurality of cells 2 is opened. Accordingly, oxygen generated from the first electrode 24 of a cell 2 in which a potential difference exceeds the predetermined potential difference is supplied to the second recovery passage 63 of the cell 2. Therefore, oxygen generated in a cell 2 in which a potential difference exceeds the predetermined potential difference is supplied to the second recovery passage 63c connected to the cell 2 and is mixed with the second electrolytic solution ES2. The second electrolytic solution ES2 with which the oxygen is mixed is distributed to each cell 2 through the second recovery passage 63 and the second tank 5, and the oxygen and the active material contained in the second electrolytic solution ES2 react with each other in a cell 2 in which a potential difference is large. Accordingly, discharge is performed, so that a difference in potential balance between the first electrode 24 and the second electrode 26 of the cell 2 is eliminated.

The present invention is not limited to the above-mentioned embodiments, and includes modifications of the above-mentioned embodiments and appropriate combinations of these embodiments.

For example, an acidic aqueous solution in which hydrogen chloride or the like other than the above-mentioned sulfuric acid is dissolved can be used as the aqueous solutions containing the support electrolytes of the first electrolytic solution ES1 and the second electrolytic solution ES2. Further, a neutral aqueous solution in which potassium chloride, sodium chloride, or the like is dissolved, or an alkaline aqueous solution in which potassium hydroxide, sodium hydroxide, or the like is dissolved can also be used as the aqueous solutions containing the support electrolytes of the first electrolytic solution ES1 and the second electrolytic solution ES2.

Furthermore, for example, the active material dissolved in the first electrolytic solution ES1 or the second electrolytic solution ES2 may be a metal complex, air, halogen, organic molecules, and the like, in addition to a metal ion, such as vanadium described above. However, the active material dissolved in at least one (or both) of the first electrolytic solution ES1 and the second electrolytic solution ES2 may be quinone or hydroquinone. A metal ion that accompanies precipitation during reduction, such as zinc, may be used as the metal ion.

The contents described in each embodiment are ascertained, for example, as follows.
[1] A redox flow battery (1A to 1F) according to an aspect includesat least one cell (2) of which a first chamber (23) in which a first electrode (24) serving as an anode during charge is installed and a second chamber (25) in which a second electrode (26) serving as a cathode during charge is installed are partitioned by a membrane (21),a first tank (3) that stores a first electrolytic solution (ES1),a first circulation device (4) that includes a first supply passage (41) connecting the first tank (3) to the first chamber (23) and a first recovery passage (43) connecting the first chamber (23) to the first tank (3),a second tank (5) that stores a second electrolytic solution (ES2),a second circulation device (6) that includes a second supply passage (61) connecting the second tank (5) to the second chamber (25) and a second recovery passage (63) connecting the second chamber (25) to the second tank (5), andan adjustment passage (7A to 7F) that is provided to supply gas present in the first tank (3) or the first recovery passage (43) to the second recovery passage (63).

According to such a configuration, since gas present in the first tank (3) or the first recovery passage (43) is supplied to the second recovery passage (63) by the adjustment passage (7A to 7F), gas containing oxygen generated from the first electrode (24) due to the expansion of a power storage rate range of the redox flow battery (1A to 1F) is supplied to the second recovery passage (63). Accordingly, the oxygen contained in the gas is mixed with the second electrolytic solution (ES2) present in the second recovery passage (63) and is supplied to the cell (2) (second chamber (24)). Then, the oxygen contained in the gas, which is mixed with the second electrolytic solution (ES2), reacts with an active material contained in the second electrolytic solution (ES2) in the cell (2) (second chamber (24)), so that forced discharge is performed. Accordingly, a difference in potential balance between the first electrode (24) and the second electrode (26) is eliminated, so that a reduction in charge/discharge efficiency and a reduction in capacity are also eliminated. For example, in a case where vanadium ions (V²⁺) are used as the active material of the second electrolytic solution (ES2), the oxygen contained in the second electrolytic solution (ES2) reacts with the vanadium ions (V²⁺) (O₂+4H⁺+4V²⁺→4V³⁺+2H₂O). Accordingly, V²⁺ ions are discharged to V³⁺ (forced discharge). Therefore, a difference in potential balance between the first electrode (24) and the second electrode (26) is eliminated, so that a reduction in charge efficiency and a reduction in capacity are also eliminated.

[2] A redox flow battery (1A, 1B) according to another aspect is the redox flow battery (1A, 1B) according to [1] in which the adjustment passage (7A, 7B) allowsa gas phase in the first tank (3) and a liquid phase in the second recovery passage (63) to communicate with each other.

According to such a configuration, gas in the first tank (3) is supplied into the second recovery passage (63) through the adjustment passage (7A, 7B) and the gas supplied from the adjustment passage (7A, 7B) is mixed with the second electrolytic solution (ES2) in the second recovery passage (63).

[3] A redox flow battery (1B) according to another aspect is the redox flow battery (1B) according to [2] further includinga gas sensor (31) that measures the concentration of oxygen contained in the gas phase in the first tank (3), anda valve (71) that is provided on the adjustment passage (7), opens the passage in a case where the concentration of oxygen measured by the gas sensor (31) exceeds a predetermined upper limit threshold value, and closes the passage in a case where the concentration of oxygen measured by the gas sensor (31) is less than a predetermined lower limit threshold value.

According to such a configuration, the gas in the first tank (3) is supplied to the second recovery passage (63) until the concentration of oxygen contained in the gas phase in the first tank (3) is less than the lower limit threshold value after exceeding the upper limit threshold value. Accordingly, the gas (oxygen) in the first tank (3) can be effectively supplied to the second recovery passage (63). Therefore, the gas in the first tank (3) is effectively mixed with the second electrolytic solution (ES2) and a reaction in the cell (2) (second chamber (24)) is effectively performed, so that discharge in the cell 2 (second chamber 25) is efficiently performed.

[4] A redox flow battery (1C to 1F) according to another aspect is the redox flow battery (1C to 1F) according to [1] in which the adjustment passage (7C to 7F) allowsa gas phase in the first recovery passage (43) and a liquid phase in the second recovery passage (63) to communicate with each other.

According to such a configuration, gas in the first recovery passage (43) is supplied into the second recovery passage (63) through the adjustment passage (7C to 7F) and the gas supplied from the adjustment passage (7C to 7B) is mixed with the second electrolytic solution (ES2) in the second recovery passage (63).

[5] A redox flow battery (1C to 1F) according to another aspect is the redox flow battery (1C to 1F) according to [4] in which the first recovery passage (43) includes an ascending portion (43a) that extends upward in a direction of gravity, and a descending portion (43b) that extends from an upper end (43a1) of the ascending portion (43a) toward the first tank (3) such that the upper end of the ascending portion is present at a highest position of the descending portion in the direction of gravity, andthe adjustment passage (7) is connected to the upper end (43a1) of the ascending portion (43a).

According to such a configuration, oxygen generated at the first electrode (24) is accumulated at the upper end (43a1) of the ascending portion (43a) from the first chamber (23) through the ascending portion (43a) of the first recovery passage (43). Then, the oxygen accumulated at the upper end (43a1) of the ascending portion (43a) is supplied to the second recovery passage (63) through the adjustment passage (7).

[6] A redox flow battery (1D, 1E) according to another aspect is the redox flow battery (1) according to [4] in which the first recovery passage (43) includes an ascending portion (43a) that extends upward in a direction of gravity, a gas reservoir (46) that is provided at an upper end (43a1) of the ascending portion (43a), and a descending portion that extends from the gas reservoir toward the first tank (3) such that the gas reservoir is present at a highest position of the descending portion in the direction of gravity, andthe adjustment passage (7) is connected to the gas reservoir (46).

According to such a configuration, oxygen generated at the first electrode (24) is accumulated in the gas reservoir (46) provided at the upper end (43a1) of the ascending portion (43a) of the first recovery passage (43). Then, the oxygen accumulated in the gas reservoir (46) is supplied to the second recovery passage (63) through the adjustment passage (7).

[7] A redox flow battery (1E) according to another aspect is the redox flow battery (1E) according to [6] further includinga valve (71) that is provided on the adjustment passage (7E) and opens or closes the adjustment passage (7),a level sensor (47) that detects a solution level of the first electrolytic solution (ES1) in the gas reservoir (46), anda valve controller (72) that opens the valve 71 in a case where the solution level of the first electrolytic solution (ES1) detected by the level sensor (48) is lower than a predetermined lower limit height but closes the valve (71) in a case where the solution level of the first electrolytic solution (ES1) detected by the level sensor (48) is higher than a predetermined upper limit height.

According to such a configuration, the gas (oxygen) accumulated in the gas reservoir (46) is supplied to the second recovery passage (63) until the solution level of the first electrolytic solution (ES1) in the gas reservoir (46) becomes higher than the predetermined upper limit height after becoming lower than the predetermined lower limit height.

[8] A redox flow battery (1F) according to another aspect is the redox flow battery (1F) according to [1] in which the at least one cell (2) includes at least two or more cells (2),each of the at least two or more cells (2) is provided with a potential difference-detecting device (8) that detects a potential difference in the cell, the adjustment passage (7F), and a valve (71) that opens or closes the adjustment passage (7F), andthe valve (71) for a cell (2) in which a potential difference exceeds a predetermined potential difference among the at least two or more cells (2) is opened.

According to such a configuration, the valve (71) for a cell (2) in which a potential difference exceeds a predetermined potential difference among the at least two or more cells (2) is opened. Accordingly, oxygen generated from the first electrode (24) of a cell (2) in which a potential difference exceeds the predetermined potential is supplied to the second recovery passage (63) of the cell (2). Therefore, oxygen generated in a cell (2) in which a potential difference exceeds the predetermined potential difference is supplied to the second recovery passage (63a) connected to the cell (2) and is mixed with the second electrolytic solution (ES2). The second electrolytic solution (ES2) with which the oxygen is mixed is distributed to each cell (2) through the second recovery passage (63) and the second tank (5), and the oxygen and the active material contained in the second electrolytic solution (ES2) react with each other in a cell (2) in which a potential difference is large. Accordingly, discharge is performed, so that a difference in potential balance between the first electrode (24) and the second electrode (26) of the cell (2) is eliminated.

[9] A redox flow battery (1A to 1F) according to another aspect is the redox flow battery (1A to 1F) according to any one of [1] to [8] in which an inner wall (63a) of the second recovery passage (63) includes a helical groove (63a1).

According to such a configuration, a turning component is imparted to the second electrolytic solution (ES2) flowing through the second recovery passage (63), so that the second electrolytic solution (ES2) turns helically. Accordingly, the gas supplied to the second recovery passage (63) from the adjustment passage (7A to 7F) is effectively mixed with the second electrolytic solution (ES2). As a result, discharge in the cell (2) (second chamber (24)) is efficiently performed.

### Reference Signs List

1A to 1F: redox flow battery
2: cell
21: membrane
23: first chamber
24: first electrode (positive electrode)
25: second chamber
26: second electrode (negative electrode)
3: first tank
31: gas sensor
4: first circulation device
41: first supply passage
42: first pump
43: first recovery passage
43a: ascending portion
43a1: upper end
43b: descending portion
43c: first recovery passage
44: first heat exchanger
46: gas reservoir
47: level sensor
48: valve controller
5: second tank
6: second circulation device
61: second supply passage
62: second pump
63: second recovery passage
63a: inner wall of second recovery passage
63a1: helical groove
63c: second recovery passage
64: second heat exchanger
7A to 7F: adjustment passage
71: valve
8: potential difference-detecting device
100: AC-DC converter
200: AC power supply
300: load
ES1: first electrolytic solution (positive electrode-electrolytic solution)
ES2: second electrolytic solution (negative electrode-electrolytic solution)

## Claims

1. A redox flow battery comprising:
at least one cell of which a first chamber in which a first electrode serving as an anode during charge is installed and a second chamber in which a second electrode serving as a cathode during charge is installed are partitioned by a membrane;
a first tank that stores a first electrolytic solution;
a first circulation device that includes a first supply passage connecting the first tank to the first chamber and a first recovery passage connecting the first chamber to the first tank;
a second tank that stores a second electrolytic solution;
a second circulation device that includes a second supply passage connecting the second tank to the second chamber and a second recovery passage connecting the second chamber to the second tank; and
an adjustment passage that is provided to supply gas present in the first tank or the first recovery passage to the second recovery passage.

2. The redox flow battery according to claim 1,
wherein the adjustment passage allows a gas phase in the first tank and a liquid phase in the second recovery passage to communicate with each other.

3. The redox flow battery according to claim 2, further comprising:
a gas sensor that measures a concentration of oxygen contained in the gas phase in the first tank; and
a valve that is provided on the adjustment passage, opens the passage in a case where the concentration of oxygen measured by the gas sensor exceeds a predetermined upper limit threshold value, and closes the passage in a case where the concentration of oxygen measured by the gas sensor is less than a predetermined lower limit threshold value.

4. The redox flow battery according to claim 1,
wherein the adjustment passage allows a gas phase in the first recovery passage and a liquid phase in the second recovery passage to communicate with each other.

5. The redox flow battery according to claim 4,
wherein the first recovery passage includes an ascending portion that extends upward in a direction of gravity, and a descending portion that extends from an upper end of the ascending portion toward the first tank such that the upper end of the ascending portion is present at a highest position of the descending portion in the direction of gravity, and
the adjustment passage is connected to the upper end of the ascending portion.

6. The redox flow battery according to claim 4,
wherein the first recovery passage includes an ascending portion that extends upward in a direction of gravity, a gas reservoir that is provided at an upper end of the ascending portion, and a descending portion that extends from the gas reservoir toward the first tank such that the gas reservoir is present at a highest position of the descending portion in the direction of gravity, and
the adjustment passage is connected to the gas reservoir.

7. The redox flow battery according to claim 6, further comprising:
a valve that is provided on the adjustment passage and opens or closes the adjustment passage;
a level sensor that detects a solution level of the first electrolytic solution in the gas reservoir; and
a valve controller that opens the valve in a case where the solution level of the first electrolytic solution detected by the level sensor is lower than a predetermined lower limit height but closes the valve in a case where the solution level of the first electrolytic solution detected by the level sensor is higher than a predetermined upper limit height.

8. The redox flow battery according to claim 1,
wherein the at least one cell includes at least two or more cells,
each of the at least two or more cells is provided with a potential difference-detecting device that detects a potential difference in the cell, the adjustment passage, and a valve that opens or closes the adjustment passage, and
the valve for a cell in which a potential difference exceeds a predetermined potential difference among the at least two or more cells is opened.

9. The redox flow battery according to any one of claims 1 to 8,
wherein an inner wall of the second recovery passage includes a helical groove.
